# EUROPEAN PATENT SPECIFICATION

(11) **EP 4 210 153 B1**
(45) Date of publication and mention of the grant of the patent: **04.02.2026**
(21) Application number: 22784925.4
(22) Date of filing: 05.04.2022
(51) Int. Cl.: H01M 10/613, H01M 10/627, H01M 10/647, H01M 10/6556, H01M 10/6557, H01M 50/211, H01M 50/502, H01M 50/251, H01M 50/262

(54) **BATTERY MODULE AND ESS COMPRISING SAME**
BATTERIEMODUL UND ESS DAMIT
MODULE DE BATTERIE ET SYSTÈME DE STOCKAGE D'ÉNERGIE LE COMPRENANT

(30) Priority: 05.04.2021 KR 20210044323
(43) Date of publication of application: 12.07.2023
(73) Proprietor: LG Energy Solution, Ltd., Seoul 07335 (KR)
(72) Inventor: YU, Sang-Hyun, Daejeon 34122 (KR); CHO, Young-Bum, Daejeon 34122 (KR); KU, Won-Hoe, Daejeon 34122 (KR); YOON, Han-Ki, Daejeon 34122 (KR); KONG, Yu-Dam, Daejeon 34122 (KR); SHIN, Jin-Kyu, Daejeon 34122 (KR)
(74) Representative: Plasseraud IP
(86) International application number: PCT/KR2022/004896
(87) International publication number: WO 2022/216016

(56) References cited:
- WO-A1-2020/246722
- KR-A- 20140 084 487
- KR-A- 20150 100 365
- KR-A- 20170 095 052
- KR-A- 20180 091 600
- US-B2- 10 439 175

## Description

### TECHNICAL FIELD

The present disclosure relates to a battery module and an energy storage system (ESS) including the same, and more specifically, to a battery module having a structure capable of minimizing temperature deviation over the entire region of the battery module and an ESS including the same.

The present application claims priority to Korean Patent Application No. 10-2021-0044323 filed on April 5, 2021 in the Republic of Korea.

### BACKGROUND ART

In the conventional water cooling system applied to an ESS, it was common to apply a cooling member made of a metal material such as aluminum or the like. However, when the cooling member made of such a metal material is applied to form a coolant path, there are disadvantages in that the weight of the battery module and/or the ESS increases and the process for forming the flow path becomes complicated.

In addition, when a cooling member made of a metal material is applied in configuring the ESS, a structure for preventing contact between the battery cell and/or a component for electrical connection and the cooling member should be separately applied, thereby causing complexity of the structure.

Of course, when the cooling member is made of a metal material, there is an advantage in cooling due to high thermal conductivity compared to the case where the cooling member is made of another material such as a resin material or the like.

However, considering that a temperature of the battery module is within approximately 55°C in the normal use state of the ESS, it is possible to satisfy the cooling performance required for the ESS through measures such as structural supplementation or the like, even if the thermal conductivity of the cooling member itself is somewhat lower than that of the metal material.

What is important in cooling the battery module and/or the ESS is not the cooling performance for a specific portion, but to minimize temperature deviation due to uniform cooling over the entire region of the battery module and/or the ESS.

In an abnormal situation such as thermal runaway or the like, which is not in the normal use state of the ESS, the coolant flowing inside the cooling member is discharged from the cooling member and needs to be used for faster cooling or fire extinguishing.

Further prior art is described in US 10 439 175 B2, KR 2018 0091600 A, KR 2017 0095052 A, WO 2020/246722 A1, KR 2015 0100365 A and KR 2014 0084487 A.

### DISCLOSURE

### Technical Problem

The present disclosure has been devised in consideration of the above-described problems, and therefore the present disclosure is directed to minimizing temperature deviation for each location in the battery module by enabling uniform cooling over the entire region of the battery module.

In addition, the present disclosure is directed to preventing the outbreak of fire caused by an abnormal temperature rise of the battery module and/or the ESS by discharging a coolant to the outside of a cooling member to perform cooling through direct contact with the battery cell when an abnormal situation such as thermal runaway of the battery cell constituting the battery module occurs.

The present disclosure is also directed to preventing leakage of the cooling member and/or strengthening fixing force of the battery cell and/or simplifying an electrical connection structure, and/or increasing assembly rigidity of the battery module through structural improvement of the battery module.

However, technical problems to be solved by the present disclosure are not limited to the above-described problems, and other problems not mentioned herein may be clearly understood by those skilled in the art from the following description of the present disclosure.

### Technical Solution

A battery module according to an embodiment of the present disclosure for solving the above-described problem includes a sub-module stack formed by stacking a plurality of sub-modules including a cooling member having a coolant flow path and a plurality of battery cells disposed on both surfaces of the cooling member; and a pair of bus bar frame assemblies coupled to one side and the other side of the sub-module stack to electrically connect the plurality of battery cells, wherein the cooling member includes a first flow path plate having a first flow path groove; and a second flow path plate having a second flow path groove coupled to the first flow path groove to form the coolant flow path, wherein the first flow path plate and the second flow path plate are made of a resin material, and an ultrasonic welding portion is formed at a bonding interface between the first flow path plate and the second flow path plate, and wherein a coolant flowing through the coolant flow path is in direct contact with the battery cell by melting at least a part of the cooling member by an abnormal temperature rise of the battery module.

A pair of electrode leads provided in the plurality of battery cells may extend in opposite directions to each other along the width direction of the cooling member, and the plurality of battery cells may be disposed along the longitudinal direction of the cooling member on both surfaces of the cooling member.

The coolant flow path may reciprocate between one side and the other side in the longitudinal direction of the cooling member and may extend from one side to the other side in the width direction of the cooling member.

The first flow path plate may include ultrasonic welding bases formed at both sides of the first flow path groove, respectively.

The second flow path plate may include at least one ultrasonic welding rib formed at both sides of the second flow path groove, respectively.

The ultrasonic welding ribs may be provided in plurality, and the plurality of ultrasonic welding ribs may be disposed to be spaced apart from each other.

A depth of the first flow path groove may be in the range of 1/2 to 1/5 of a thickness of the first flow path plate.

A depth of the second flow path groove may be in the range of 1/2 to 1/5 of a thickness of the second flow path plate.

The pair of bus bar frame assemblies may connect a pair of battery cells facing each other with the cooling member interposed therebetween in parallel, may connect the battery cells adjacent to each other along the longitudinal direction of the cooling member in series, and may connect the sub-modules adjacent to each other in series.

The battery module may further include a base plate covering a lower surface of the sub-module stack; a top plate covering an upper surface of the sub-module stack; and a plurality of straps surrounding the circumference of the battery module so that the base plate and the top plate press the sub-module stack.

The battery module may further include a module inlet and a module outlet connected to the coolant flow path, wherein the module inlet and the module outlet may be provided on the same surface of the battery module.

The battery module may further include a first module terminal and a second module terminal electrically connected to the sub-module stack, wherein the first module terminal and the second module terminal may be provided on the same surface of the battery module.

An ESS according to an embodiment of the present disclosure for solving the above-described problem includes at least one battery module according to an embodiment of the present disclosure as described above.

### Advantageous Effects

According to one aspect of the present disclosure, uniform cooling may be achieved over the entire region of the battery module, and accordingly, temperature deviation for each location in the battery module may be minimized.

According to another aspect of the present disclosure, when an abnormal situation such as thermal runaway of the battery cell constituting the battery module occurs, a coolant is discharged to the outside of the cooling member to enable cooling through direct contact with the battery cell, thereby preventing a fire caused by an abnormal temperature rise of the battery module and/or the ESS or quickly extinguishing a fire that has already broken out.

According to still another aspect of the present disclosure, through structural improvement of the battery module, it is possible to prevent leakage of the cooling member and/or strengthen fixing force of the battery cell and/or simplify an electrical connection structure, and/or increase assembly rigidity of the battery module.

However, advantageous effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure should not be construed as being limited to the drawings.
FIGS. 1 and 2 are views illustrating a battery module according to an embodiment of the present disclosure.
FIG. 3 is a view illustrating a state in which an exterior sheet is removed from the battery module shown in FIG. 1.
FIG. 4 is a view illustrating a state in which a top plate and a front plate are removed from the battery module shown in FIG. 3.
FIG. 5 is a view illustrating a state in which a bus bar frame assembly is removed from the battery module shown in FIG. 4.
FIG. 6 is a view illustrating a sub-module of the present disclosure.
FIGS. 7 and 8 are views illustrating a cooling member of the present disclosure.
FIG. 9 is view illustrating one surface of a second flow path plate of the present disclosure.
FIG. 10 is a view illustrating a cross-section taken along line A-A' of FIG. 7.
FIG. 11 is a view illustrating a cross-section taken along line B-B' of FIG. 4.
FIG. 12 is a view illustrating an electrical connection structure by a bus bar frame assembly of the present disclosure.
FIGS. 13 and 14 are views illustrating an example in which a strap is applied to the battery module shown in FIG. 3.
FIGS. 15 and 16 are partially enlarged views illustrating one surface of a battery module according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

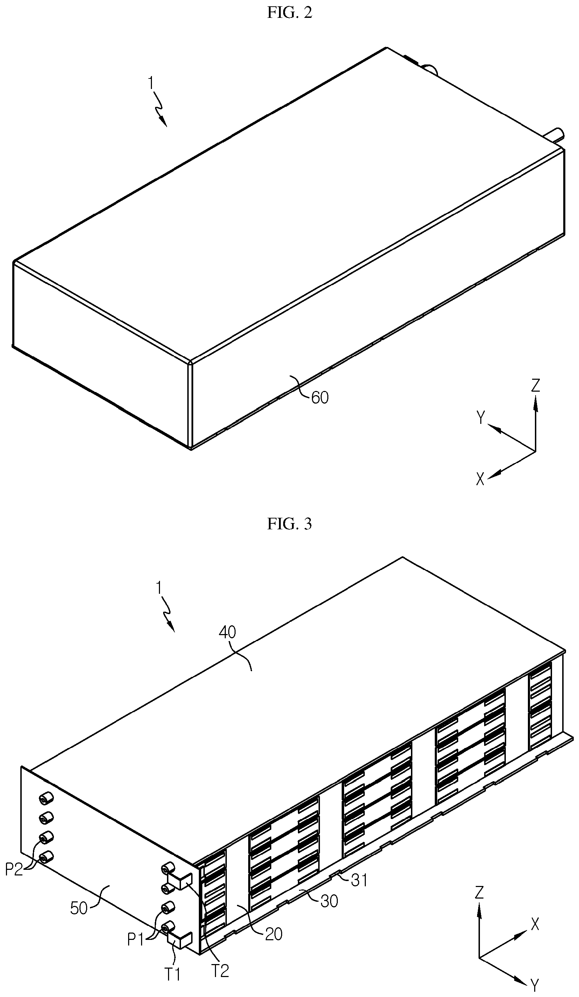

First, referring to FIGS. 3 to 6, the battery module 1 according to an embodiment of the present disclosure includes a sub-module stack 10 and a pair of bus bar frame assemblies 20 coupled to the sub-module stack 10.

The sub-module stack 10 is formed by stacking a plurality of sub-modules 100 in a height direction (a direction parallel to the Z-axis) of the battery module 1. The sub-module 100 includes a plurality of battery cells 110 and a cooling member 120 accommodating the plurality of battery cells 110. Meanwhile, the sub-module stack 10 may further include a pair of cover sheets S that cover the pair of sub-modules 100 disposed at the outermost side of the stack. The cover sheet S may be made of an insulating material.

The battery cell 110 may be, for example, a pouch type battery cell. The battery cell 110 includes a pair of electrode leads 111 that are respectively drawn out to both sides in the longitudinal direction (a direction parallel to the Y-axis). The plurality of battery cells 110 are disposed on both surfaces of the cooling member 120. The plurality of battery cells 110 are disposed adjacent to each other along the longitudinal direction (a direction parallel to the X-axis) of the cooling member 120 on both surfaces of the cooling member 120. Accordingly, the pair of electrode leads 111 provided in the battery cell 110 extend in opposite directions to each other along the width direction (a direction parallel to the Y-axis) of the cooling member 120.

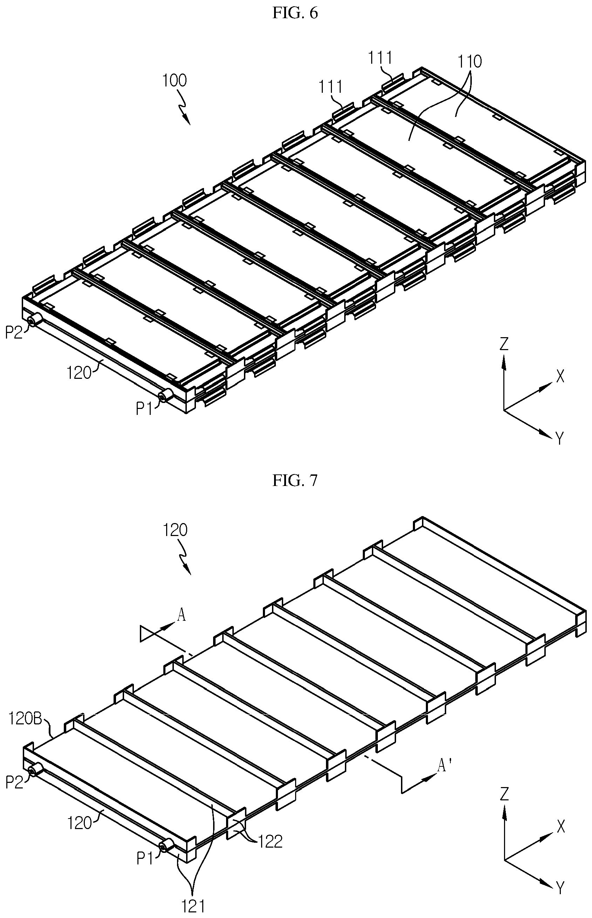

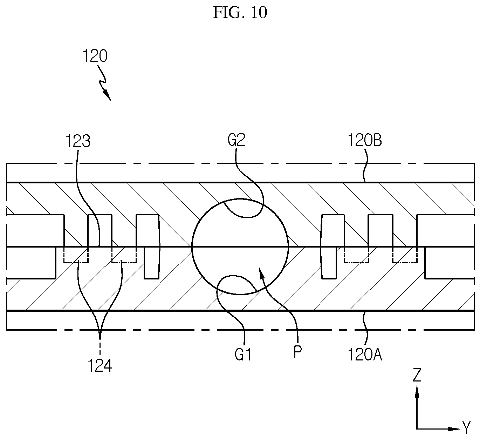

Referring to FIGS. 7 to 10, the cooling member 120 includes a coolant flow path P formed therein. The coolant flow path P reciprocates between one side and the other side in the longitudinal direction (a direction parallel to the X-axis) of the cooling member 120 and extends from one side to the other side in the width direction (a direction parallel to the Y-axis) of the cooling member 120. The coolant flow path P communicates with the outside of the cooling member 120 through a pair of coolant ports P1, P2. One of the pair of coolant ports P1, P2 functions as a coolant inlet in the cooling member 120, and the other functions as a coolant outlet in the cooling member 120. The pair of coolant ports P1, P2 are provided in the same direction. That is, the pair of coolant ports P1, P2 are provided on the same surface of the sub-module 100. In addition, the pair of coolant ports P1, P2 are provided at one side and the other side in the width direction (a direction parallel to the Y-axis) of the sub-module 100, respectively.

The cooling member 120 includes a first flow path plate 120A and a second flow path plate 120B. The first flow path plate 120A includes a first flow path groove G1. The second flow path plate 120B includes a second flow path groove G2 coupled to the first flow path groove G1 to form the coolant flow path P.

Meanwhile, in the present disclosure, the coolant applied as a refrigerant includes all liquid refrigerants, and for example, coolant containing no additives, coolant containing additives, insulating oil, or the like may be used as the coolant of the present disclosure.

The first flow path plate 120A and the second flow path plate 120B are made of a resin material. An ultrasonic welding portion is formed at a bonding interface between the first flow path plate 120A and the second flow path plate 120B. That is, the first flow path plate 120A and the second flow path plate 120B are coupled to each other by ultrasonic welding.

Referring to FIGS. 6 and 7, the cooling member 120 includes a plurality of partition walls 121, 122 formed on both surfaces thereof to provide a partitioned space in which each of the battery cells 110 may be accommodated. That is, each of the first flow path plate 120A and the second flow path plate 120B includes the first partition wall 121 and the second partition wall 122 protruding from the surface opposite to a surface on which the flow path grooves G1, G2 are formed.

The first partition wall 121 extends along the width direction (a direction parallel to the Y-axis) of the flow path plates 120A, 120B, and a distance between the first partition walls 121 adjacent to each other corresponds to a width of the battery cell 110. The second partition wall 122 is connected to the first partition wall 121 and is formed at both ends of the first partition wall 121 in the longitudinal direction (a direction parallel to the Y-axis), respectively. The second partition wall 122 has a shape extending in a direction substantially perpendicular to the first partition wall 121. The electrode lead 111 of the battery cell 110 is drawn out through a space formed between the second partition walls 122 adjacent to each other along the longitudinal direction of the flow path plates 120A, 120B.

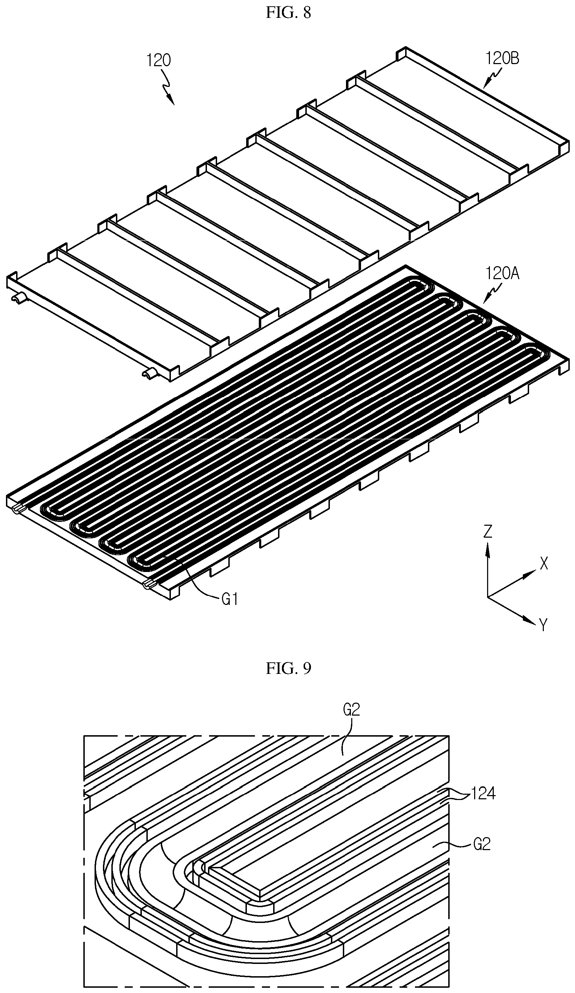

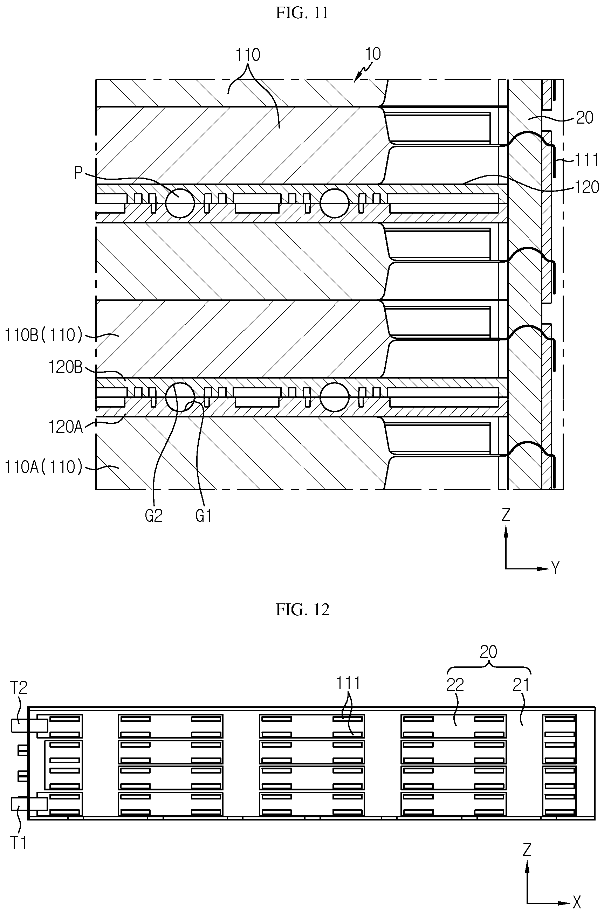

Referring to FIGS. 9 to 11, the first flow path plate 120A includes ultrasonic welding bases 123 formed at both sides of the first flow path groove G1, respectively. The second flow path plate 120B includes at least one ultrasonic welding rib 124 formed at both sides of the second flow path groove G2, respectively. The ultrasonic welding rib 124 is provided at a position corresponding to the ultrasonic welding base 123 so as to be in contact with the ultrasonic welding base 123 when the first flow path plate 120A and the second flow path plate 120B are in contact with each other to be coupled.

The ultrasonic welding rib 124 is bonded on the ultrasonic welding base 123 by ultrasonic welding. When there are a plurality of ultrasonic welding ribs 124, each ultrasonic welding rib 124 may be disposed to be spaced apart from each other. When there are a plurality of ultrasonic welding ribs 124, the sealing performed at both sides of the coolant flow path P may become more robust, thereby preventing the coolant from leaking to the outside of the coolant flow path P.

Meanwhile, a depth of the first flow path groove G1 may be in the range of approximately 1/2 to 1/5 of a thickness of the first flow path plate 120A. The thickness range of the first flow path groove G1 is for cooling efficiency, and also for allowing faster cooling and/or fire extinguishing due to the coolant's direct contact with the first battery cell 110A in contact with the first flow path plate 120A by rapidly melting the resin injection material forming the bottom of the first flow path groove G1 in an emergency situation such as thermal runaway.

Likewise, the depth of the second flow path groove G2 may be in the range of approximately 1/2 to 1/5 of the thickness of the second flow path plate 120B. The thickness range of the second flow path groove G2 is for cooling efficiency, and also for allowing faster cooling and/or fire extinguishing due to the coolant's direct contact with the second battery cell 110B in contact with the second flow path plate 120B by rapidly melting the resin injection material forming the bottom of the second flow path groove G2 in an emergency situation such as thermal runaway.

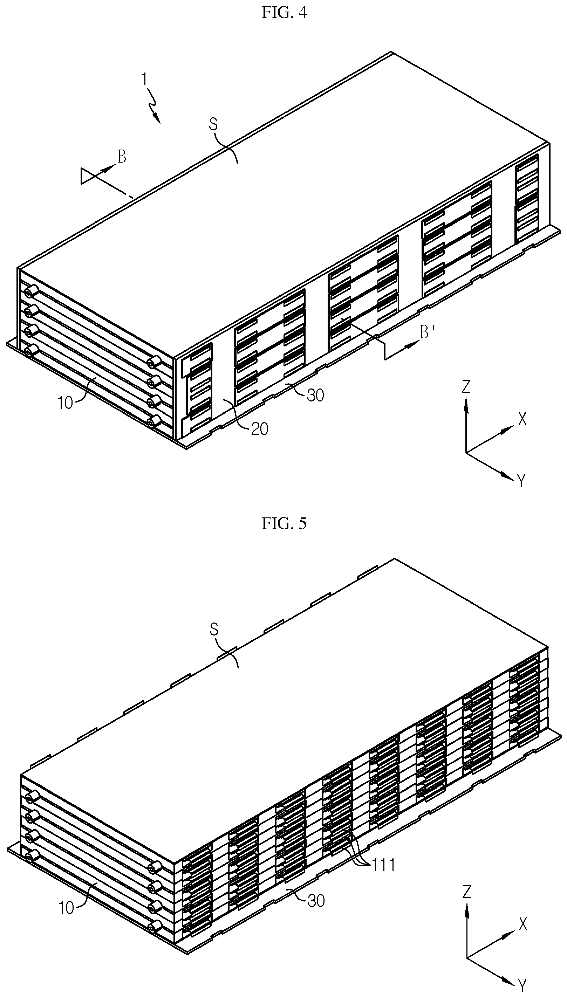

Referring to FIGS. 4, 5, 11, and 12, the pair of bus bar frame assemblies 20 are coupled to one side and the other side of the sub-module stack 10, respectively, to electrically connect a plurality of battery cells 110. The bus bar frame assembly 20 includes a bus bar frame 21 coupled to a side of the sub-module stack 10, and a plurality of bus bars 22 disposed on the bus bar frame 21 and coupled to a plurality of electrode leads 111.

The pair of bus bar frame assemblies 20 connect a pair of battery cells 110A, 110B facing each other with the cooling member 120 interposed therebetween in parallel, and connect the battery cells 110 adjacent to each other along the longitudinal direction (a direction parallel to the X-axis) of the cooling member 120 in series. In addition, the pair of bus bar frame assemblies 20 connect the sub-modules 100 adjacent to each other along the height direction (a direction parallel to the Z-axis) of the sub-module stack 10 in series. The battery module 1 according to an embodiment of the present disclosure may have, for example, an electrical connection form of 32S2P according to such a connection method.

Meanwhile, the battery module 1 may further include a first module terminal T1 and a second module terminal T2 electrically connected to the bus bar 22. The first module terminal T1 and the second module terminal T2 are electrically connected to the sub-module stack 10 through the bus bar 22 to function as a high-potential terminal of the battery module 1. In this case, the first module terminal T1 and the second module terminal T2 are provided on the same surface of the battery module 1 and extend in the same direction.

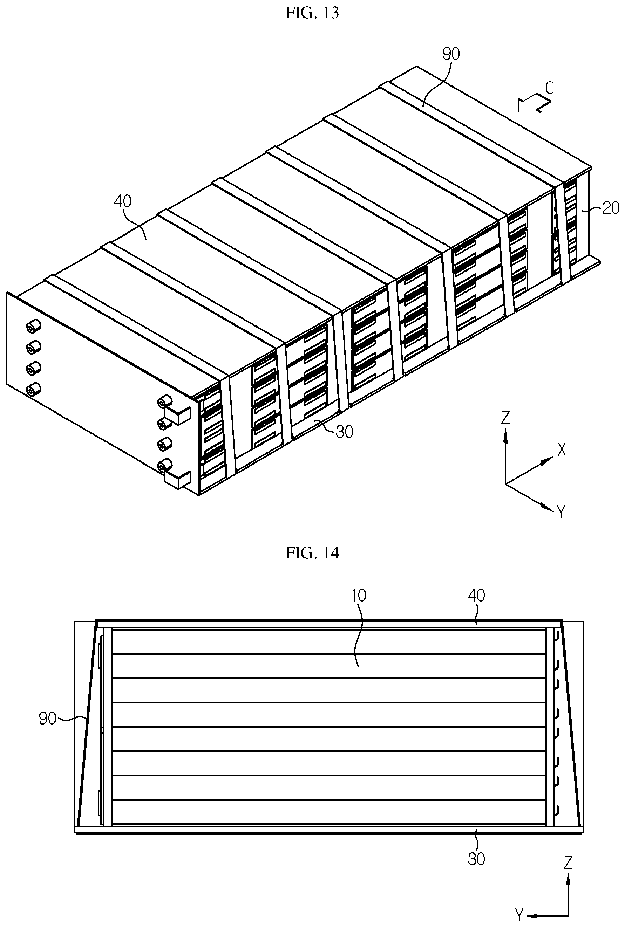

Referring to FIGS. 3, 13, and 14, the battery module 1 may further include a base plate 30 covering the lower surface of the sub-module stack 10 and a top plate 40 covering the upper surface of the sub-module stack 10. The width of the base plate 30 may be greater than the width of the top plate 40. In addition, the battery module 1 may further include a plurality of straps 90 surrounding the circumference of the battery module 1 so that the base plate 30 and the top plate 40 press the module stack. The strap 90 may be made of a steel material. The plurality of straps 90 are disposed to be spaced apart from each other along the longitudinal direction (a direction parallel to the X-axis) of the battery module 1.

When the plurality of straps 90 are provided in the battery module 1, a plurality of strap grooves 31 for fixing the straps 90 may be formed in the base plate 30.

Referring to FIGS. 3 and 4, the battery module 1 may further include a front plate 50 covering the front surface (a surface parallel to the Y-Z plane) of the sub-module stack 10. The front plate 50 may include a hole formed so that the coolant ports P1, P2 and the module terminals T1, T2 provided on one surface of the sub-module stack 10 are drawn out.

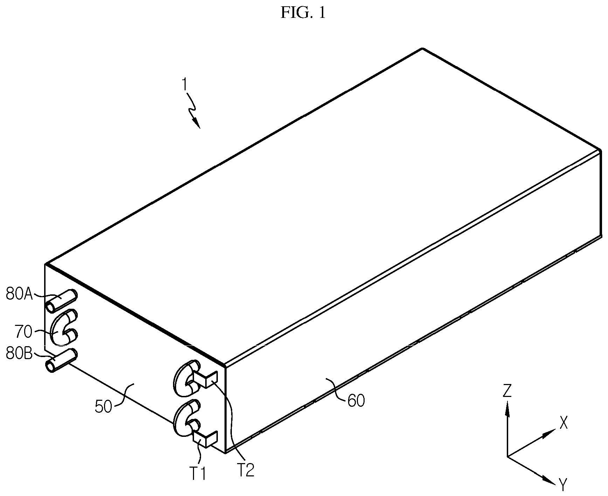

Referring to FIGS. 1 to 3, the battery module 1 may further include an exterior sheet 60 covering a base plate 30, a top plate 40, and a pair of bus bar frame assemblies 20. The exterior sheet 60 may be made of a sheet-shaped injection material or an insulating film material.

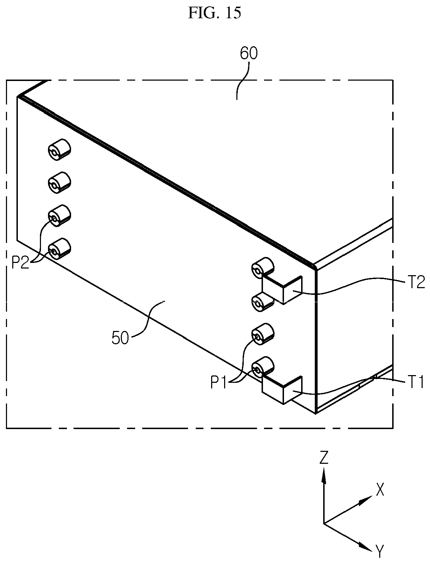

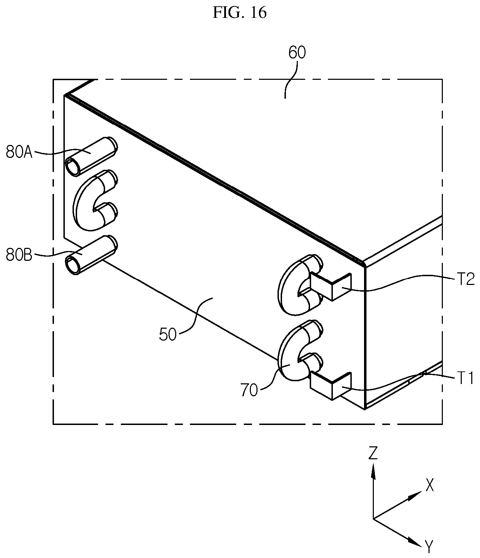

Referring to FIGS. 15 and 16, the battery module 1 may further include a connection pipe 70 for connecting the coolant flow paths P of each sub-module 100 constituting the sub-module stack 10 to each other. The connection pipe 70 may be provided in plurality, and each connection pipe 70 is adjacent to each other and connects a pair of coolant ports P1 or P2 provided in different layers.

The battery module 1 may further include a module inlet 80A connected to the coolant port P2 located at the uppermost end of the sub-module stack 10 and a module outlet 80B connected to the coolant port P2 located at the lowermost end of the sub-module stack 10. The module inlet 80A and the module outlet 80B are provided on the same surface of the battery module 1 and extend in the same direction.

As described above, the battery module 1 according to an embodiment of the present disclosure has a structure capable of realizing uniform cooling over the entire region of the battery module 1, thereby minimizing temperature deviation for each location in the battery module 1.

In addition, the battery module 1 according to an embodiment of the present disclosure has a structure capable of realizing cooling and/or fire extinguishing through direct contact with the battery cell by discharging the coolant to the outside of the cooling member 120 when an abnormal situation such as thermal runaway of the battery cell 110 occurs. Therefore, according to the present disclosure, it is possible to prevent the outbreak of fire caused by an abnormal temperature rise of the battery module 1 or to quickly extinguish a fire that has already broken out.

In addition, the battery module 1 according to an embodiment of the present disclosure has a structure in which sealing properties at a bonding portion between the pair of flow path plates 120A, 120B may be increased, thereby preventing leakage of the coolant.

Meanwhile, an energy storage system (ESS) according to an embodiment of the present disclosure includes at least one battery module 1 according to an embodiment of the present disclosure as described above.

### <Reference Signs>

1: battery module
10: sub-module stack
100: sub-module
110: battery cell
111: electrode lead
120: cooling member
120A: first flow path plate
120B: second flow path plate
P1, P2: coolant port
121: first partition wall
122: locking partition wall
123: ultrasonic welding base
124: ultrasonic welding rib
G1: first flow path groove
G2: second flow path groove
P: coolant flow path
20: bus bar frame assembly
21: bus bar frame
22: bus bar
S: cover sheet
30: base plate
31: strap groove
40: top plate
50: front plate
T1: first module terminal
T2: second module terminal
60: exterior sheet
70: connection pipe
80A: module inlet
80B: module outlet
90: strap

## Claims

1. A battery module (1) comprising:
a sub-module stack (10) formed by stacking a plurality of sub-modules (100) comprising a cooling member (120) having a coolant flow path (P) and a plurality of battery cells (110) disposed on both surfaces of the cooling member (120); and
a pair of bus bar frame assemblies (20) coupled to one side and the other side of the sub-module stack (10) to electrically connect the plurality of battery cells (110),
**characterized in that** the cooling member (120) comprises:
a first flow path plate (120A) having a first flow path groove (G1); and
a second flow path plate (120B) having a second flow path groove (G2) coupled to the first flow path groove (G1) to form the coolant flow path (P),
wherein the first flow path plate (120A) and the second flow path plate (120B) are made of a resin material, and an ultrasonic welding portion is formed at a bonding interface between the first flow path plate (120A) and the second flow path plate (120B), and
wherein a coolant flowing through the coolant flow path (P) is in direct contact with the battery cell (110) by melting at least a part of the cooling member (120) by an abnormal temperature rise of the battery module (1).

2. The battery module (1) according to claim 1,
wherein a pair of electrode leads (111) provided in the plurality of battery cells (110) extend in opposite directions to each other along the width direction of the cooling member (120), and
the plurality of battery cells (110) are disposed along the longitudinal direction of the cooling member (120) on both surfaces of the cooling member (120).

3. The battery module (1) according to claim 2,
wherein the coolant flow path (P) reciprocates between one side and the other side in the longitudinal direction of the cooling member (120) and extends from one side to the other side in the width direction of the cooling member (120).

4. The battery module (1) according to claim 1,
wherein the first flow path plate (120A) comprises ultrasonic welding bases (123) formed at both sides of the first flow path groove (G1), respectively.

5. The battery module (1) according to claim 4,
wherein the second flow path plate (120B) comprises at least one ultrasonic welding rib (124) formed at both sides of the second flow path groove (G2), respectively.

6. The battery module (1) according to claim 5,
wherein the ultrasonic welding ribs (124) are provided in plurality, and the plurality of ultrasonic welding ribs (124) are disposed to be spaced apart from each other.

7. The battery module (1) according to claim 1,
wherein a depth of the first flow path groove (G1) is in the range of 1/2 to 1/5 of a thickness of the first flow path plate (120A).

8. The battery module (1) according to claim 1,
wherein a depth of the second flow path groove (G2) is in the range of 1/2 to 1/5 of a thickness of the second flow path plate (120B).

9. The battery module (1) according to claim 1,
wherein the pair of bus bar frame assemblies (20) connect a pair of battery cells (110) facing each other with the cooling member (120) interposed therebetween in parallel, connect the battery cells (110) adjacent to each other along the longitudinal direction of the cooling member (120) in series, and connect the sub-modules (100) adjacent to each other in series.

10. The battery module (1) according to claim 1,
which further comprises:
a base plate (30) covering a lower surface of the sub-module stack (10);
a top plate (40) covering an upper surface of the sub-module stack (10); and
a plurality of straps (90) surrounding the circumference of the battery module (1) so that the base plate (30) and the top plate (40) press the sub-module stack (10).

11. The battery module (1) according to claim 1,
which further comprises a module inlet (80A) and a module outlet (80B) connected to the coolant flow path (P),
wherein the module inlet (80A) and the module outlet (80B) are provided on the same surface of the battery module (1).

12. The battery module (1) according to claim 1,
which further comprises a first module terminal (T1) and a second module terminal (T2) electrically connected to the sub-module stack (10),
wherein the first module terminal (T1) and the second module terminal (T2) are provided on the same surface of the battery module (1).

13. An ESS comprising at least one battery module (1) according to any one of claims 1 to 12.

## Patentansprüche

1. Batteriemodul (1), umfassend:
einen Untermodul-Stapel (10), welcher durch Stapeln einer Mehrzahl von Untermodulen (100) gebildet ist, welche ein Kühlelement (120), welches einen Kühlmittel-Strömungspfad (P) aufweist, und eine Mehrzahl von Batteriezellen (110) umfasst, welche an beiden Flächen des Kühlelements (120) angeordnet sind; und ein Paar von Sammelschienen-Rahmenanordnungen (20), welche mit einer Seite und der anderen Seite des Untermodul-Stapels (10) gekoppelt sind, um die Mehrzahl von Batteriezellen (110) elektrisch zu verbinden,
**dadurch gekennzeichnet, dass** das Kühlelement (120) umfasst:
eine erste Strömungspfad-Platte (120A), welche eine erste Strömungspfad-Nut (G1) aufweist; und
eine zweite Strömungspfad-Platte (120B), welche eine zweite Strömungspfad-Nut (G2) aufweist, welche mit der ersten Strömungspfad-Nut (G1) gekoppelt ist, um den Kühlmittel-Strömungspfad (P) zu bilden,
wobei die erste Strömungspfad-Platte (120A) und die zweite Strömungspfad-Platte (120B) aus einem Harzmaterial hergestellt sind und ein Ultraschall-Schweißabschnitt an einer Verbindungsschnittstelle zwischen der ersten Strömungspfad-Platte (120A) und der zweiten Strömungspfad-Platte (120B) gebildet ist, und
wobei ein Kühlmittel, welches durch den Kühlmittel-Strömungspfad (P) strömt, in direktem Kontakt mit der Batteriezelle (110) ist, indem wenigstens ein Teil des Kühlelements (120) durch einen anormalen Temperaturanstieg des Batteriemoduls (1) geschmolzen wird.

2. Batteriemodul (1) nach Anspruch 1,
wobei sich ein Paar von Elektrodenleitungen (111), welche in der Mehrzahl von Batteriezellen (110) bereitgestellt sind, in entgegengesetzte Richtungen zueinander entlang der Breitenrichtung des Kühlelements (120) erstrecken, und
die Mehrzahl von Batteriezellen (110) entlang der longitudinalen Richtung des Kühlelements (120) an beiden Flächen des Kühlelements (120) angeordnet sind.

3. Batteriemodul (1) nach Anspruch 2,
wobei der Kühlmittel-Strömungspfad (P) zwischen einer Seite und der anderen Seite in der longitudinalen Richtung des Kühlelements (120) abwechselt und sich von einer Seite zu der anderen Seite in der Breitenrichtung des Kühlelements (120) erstreckt.

4. Batteriemodul (1) nach Anspruch 1,
wobei die erste Strömungspfad-Platte (120A) Ultraschall-Schweißbasen (123) umfasst, welche jeweils an beiden Seiten der ersten Strömungspfad-Nut (G1) gebildet sind.

5. Batteriemodul (1) nach Anspruch 4,
wobei die zweite Strömungspfad-Platte (120B) wenigstens eine Ultraschall-Schweißrippe (124) umfasst, welche jeweils an beiden Seiten der zweiten Strömungspfad-Nut (G2) gebildet ist.

6. Batteriemodul (1) nach Anspruch 5,
wobei die Ultraschall-Schweißrippen (124) in einer Mehrzahl bereitgestellt sind und die Mehrzahl von Ultraschall-Schweißrippen (124) dazu angeordnet sind, voneinander beabstandet zu sein.

7. Batteriemodul (1) nach Anspruch 1,
wobei eine Tiefe der ersten Strömungspfad-Nut (G1) in dem Bereich von 1/2 bis 1/5 einer Dicke der ersten Strömungspfad-Platte (120A) liegt.

8. Batteriemodul (1) nach Anspruch 1,
wobei eine Tiefe der zweiten Strömungspfad-Nut (G2) in dem Bereich von 1/2 bis 1/5 einer Dicke der zweiten Strömungspfad-Platte (120B) liegt.

9. Batteriemodul (1) nach Anspruch 1,
wobei das Paar von Sammelschienen-Rahmenanordnungen (20) ein Paar von Batteriezellen (110) verbindet, welche mit dem Kühlelement (120) dazwischen parallel eingefügt zueinander weisen, die Batteriezellen (110) benachbart zueinander entlang der longitudinalen Richtung des Kühlelements (120) in Reihe verbinden und die Untermodule (100) benachbart zueinander in Reihe verbinden.

10. Batteriemodul (1) nach Anspruch 1,
welches ferner umfasst:
eine Basisplatte (30), welche eine untere Fläche des Untermodul-Stapels (10) bedeckt;
eine obere Platte (40), welche eine obere Fläche des Untermodul-Stapels (10) bedeckt; und
eine Mehrzahl von Gurten (90), welche den Umfang des Batteriemoduls (1) umgeben, so dass die Basisplatte (30) und die obere Platte (40) den Untermodul-Stapel (10) pressen.

11. Batteriemodul (1) nach Anspruch 1,
welches ferner einen Moduleinlass (80A) und einen Modulauslass (80B) umfasst, welche mit dem Kühlmittel-Strömungspfad (P) verbunden sind,
wobei der Moduleinlass (80A) und der Modulauslass (80B) an derselben Fläche des Batteriemoduls (1) bereitgestellt sind.

12. Batteriemodul (1) nach Anspruch 1,
welches ferner einen ersten Modulanschluss (T1) und einen zweiten Modulanschluss (T2) umfasst, welche elektrisch mit dem Untermodul-Stapel (10) verbunden sind,
wobei der erste Modulanschluss (T1) und der zweite Modulanschluss (T2) an derselben Fläche des Batteriemoduls (1) bereitgestellt sind.

13. ESS, umfassend wenigstens ein Batteriemodul (1) nach einem der Ansprüche 1 bis 12.

## Revendications

1. Module de batterie (1) comprenant :
un empilement de sous-modules (10) formé par empilement d'une pluralité de sous-modules (100) comprenant un élément de refroidissement (120) ayant un trajet d'écoulement de liquide de refroidissement (P) et une pluralité de cellules de batterie (110) disposées sur les deux surfaces de l'élément de refroidissement (120) ; et
une paire d'ensembles châssis de barre omnibus (20) couplés à un côté et à l'autre côté de l'empilement de sous-modules (10) pour connecter électriquement la pluralité de cellules de batterie (110),
**caractérisé en ce que** l'élément de refroidissement (120) comprend :
une première plaque de trajet d'écoulement (120A) ayant une première rainure de trajet d'écoulement (G1) ; et
une deuxième plaque de trajet d'écoulement (120B) ayant une deuxième rainure de trajet d'écoulement (G2) couplée à la première rainure de trajet d'écoulement (G1) pour former le trajet d'écoulement de liquide de refroidissement (P),
dans lequel la première plaque de trajet d'écoulement (120A) et la deuxième plaque de trajet d'écoulement (120B) sont constituées d'un matériau de résine, et une partie de soudage à ultrasons est formée au niveau d'une interface de liaison entre la première plaque de trajet d'écoulement (120A) et la deuxième plaque de trajet d'écoulement (120B), et
dans lequel un liquide de refroidissement circulant à travers le trajet de liquide de refroidissement (P) est en contact direct avec la cellule de batterie (110) par fusion d'au moins une partie de l'élément de refroidissement (120) en raison d'une augmentation de température anormale du module de batterie (1).

2. Module de batterie (1) selon la revendication 1,
dans lequel une paire de fils d'électrode (111) prévus dans la pluralité de cellules de batterie (110) s'étendent dans des directions opposées l'une à l'autre le long de la direction de largeur de l'élément de refroidissement (120), et
la pluralité de cellules de batterie (110) sont disposées le long de la direction longitudinale de l'élément de refroidissement (120) sur les deux surfaces de l'élément de refroidissement (120).

3. Module de batterie (1) selon la revendication 2,
dans lequel le trajet de liquide de refroidissement (P) alterne entre un côté et l'autre dans la direction longitudinale de l'élément de refroidissement (120) et s'étend d'un côté à l'autre dans la direction de largeur de l'élément de refroidissement (120).

4. Module de batterie (1) selon la revendication 1,
dans lequel la première plaque de trajet d'écoulement (120A) comprend des bases de soudage à ultrasons (123) formées respectivement de part et d'autre de la première rainure de trajet d'écoulement (G1).

5. Module de batterie (1) selon la revendication 4,
dans lequel la deuxième plaque de trajet d'écoulement (120B) comprend au moins une nervure de soudage à ultrasons (124) formée respectivement de part et d'autre de la deuxième rainure de trajet d'écoulement (G2).

6. Module de batterie (1) selon la revendication 5,
dans lequel les nervures de soudage à ultrasons (124) sont présentes en une pluralité, et la pluralité de nervures de soudage à ultrasons (124) sont disposées de manière à être espacées les unes des autres.

7. Module de batterie (1) selon la revendication 1,
dans lequel une profondeur de la première rainure de trajet d'écoulement (G1) est dans la plage de 1/2 à 1/5 d'une épaisseur de la première plaque de trajet d'écoulement (120A).

8. Module de batterie (1) selon la revendication 1,
dans lequel une profondeur de la deuxième rainure de trajet d'écoulement (G2) est dans la plage de 1/2 à 1/5 d'une épaisseur de la deuxième plaque de trajet d'écoulement (120B).

9. Module de batterie (1) selon la revendication 1,
dans lequel la paire d'ensembles châssis de barre omnibus (20) relient en parallèle une paire de cellules de batterie (110) se faisant face avec l'élément de refroidissement (120) interposé entre elles, relient en série les cellules de batterie (110) adjacentes les unes aux autres le long de la direction longitudinale de l'élément de refroidissement (120) et relient en série les sous-modules (100) adjacents les uns aux autres.

10. Module de batterie (1) selon la revendication 1,
qui comprend en outre :
une plaque de base (30) recouvrant une surface inférieure de l'empilement de sous-modules (10) ;
une plaque supérieure (40) recouvrant une surface supérieure de l'empilement de sous-modules (10) ; et
une pluralité de sangles (90) entourant la circonférence du module de batterie (1) de sorte que la plaque de base (30) et la plaque supérieure (40) pressent l'empilement de sous-modules (10).

11. Module de batterie (1) selon la revendication 1,
qui comprend en outre une entrée de module (80A) et une sortie de module (80B) reliées au trajet d'écoulement de liquide de refroidissement (P),
dans lequel l'entrée de module (80A) et la sortie de module (80B) sont situées sur la même surface du module de batterie (1).

12. Module de batterie (1) selon la revendication 1,
qui comprend en outre une première borne de module (T1) et une deuxième borne de module (T2) connectées électriquement à l'empilement de sous-modules (10),
dans lequel la première borne de module (T1) et la deuxième borne de module (T2) sont situées sur la même surface du module de batterie (1).

13. Système de stockage d'énergie comprenant au moins un module de batterie (1) selon l'une quelconque des revendications 1 à 12.
